# EUROPÄISCHE PATENTSCHRIFT

(11) **EP 1 749 067 B1**
(45) Veröffentlichungstag und Bekanntmachung des Hinweises auf die Patenterteilung: **16.07.2008**
(21) Anmeldenummer: 05738118.8
(22) Anmeldetag: 04.05.2005
(51) Int. Cl.: C09D 5/02, C09D 1/00

(54) **KONSERVIERUNGSMITTELFREIE BESCHICHTUNGSMITTEL, VERFAHREN ZU DEREN HERSTELLUNG UND DEREN VERWENDUNG**
COATING AGENTS THAT ARE DEVOID OF PRESERVATIVES, METHOD FOR THEIR PRODUCTION AND USE THEREOF
SUBSTANCES DE REVETEMENT EXEMPTES DE CONSERVATEUR, PROCEDE DE PREPARATION DESDITES SUBSTANCES ET LEUR UTILISATION

(30) Priorität: 12.05.2004 DE 102004023374
(43) Veröffentlichungstag der Anmeldung: 07.02.2007
(73) Patentinhaber: Celanese Emulsions GmbH, 61476 Kronberg/Ts. (DE)
(72) Erfinder: FICHTNER, Thomas, 55278 Dalheim (DE); CABRERA, Ivan, 63303 Dreieich (DE); MOMPER, Bernhard, 65510 Idstein (DE)
(74) Vertreter: Ackermann, Joachim
(86) Internationale Anmeldenummer: PCT/EP2005/004826
(87) Internationale Veröffentlichungsnummer: WO 2005/111158

(56) Entgegenhaltungen:
- EP-A- 0 230 220
- GB-A- 2 385 856
- US-A- 5 567 750
- PATENT ABSTRACTS OF JAPAN Bd. 005, Nr. 152 (C-073), 25. September 1981 (1981-09-25) & JP 56 082852 A (TAKENAKA KOMUTEN CO LTD; others: 01), 6. Juli 1981 (1981-07-06)
- PATENT ABSTRACTS OF JAPAN Bd. 2000, Nr. 14, 5. März 2001 (2001-03-05) & JP 2000 319605 A (YAYOI KAGAKU KOGYO KK), 21. November 2000 (2000-11-21)
- PATENT ABSTRACTS OF JAPAN Bd. 005, Nr. 136 (C-069), 28. August 1981 (1981-08-28) & JP 56 070060 A (TSUBASA KAGAKU KOGYO KK), 11. Juni 1981 (1981-06-11)

## Beschreibung

Die vorliegende Erfindung betrifft konservierungsmittelfreie Dispersionsfarben oderlacke, die verbesserte copolymere Polyvinylester als Bindemittel enthalten. Mit den erfindungsgemäß eingesetzten Polymerdispersionen können konservierungsmittelfreie Dispersionsfarben und andere Anstrichmittel in Form von wässrigen Zubereitungen hergestellt werden, die sich Bautenschutzmittel einsetzen lassen.

Nach dem Stand der Technik enthalten Bautenschutzmittel wie z.B. Dispersionsfarben, Putze, Spachtelmassen und Fliesenkleber mehr oder weniger große Mengen an Konservierungsmittel, um einen Befall mit Mikroorganismen zu verhindern und um eine befriedigende Lagerstabilität zu erreichen. Nachteilig ist dabei, daß die bisher im Stand der Technik bekannten Konservierungsmittel, beispielsweise Isothiazolinone oder Formaldehydabspalter, meist für Allergiker nicht verträglich sind.

Aus dem Stand der Technik sind bereits mehrere konservierungsmittelfreie Dispersionsfarben bekannt geworden. Es sind Produkte bekannt, bei denen Wasserglas oder hoch alkalische Puffersysteme verwendet werden, um die Konservierungsmittelfreiheit zu ermöglichen.

So beschreibt die DE-A-100 30 447 eine konservierungsmittelfreie Farbe, die ausgewählte Anteile an Polymerdispersion, Pigment oder Füllstoff, Wasserglas und Wasser enthält.

Aus der RU-C-21 21 486 sind Farb- oder Lackformulierungen bekannt, die Emulgator, Alkaliphosphat, Wasserglas, Polysiloxan, Pigmente oder Füllstoffe, Verdicker und Bindemittel enthalten.

Die DE-A-100 01 831 beschreibt eine silikatische Beschichtungszusammensetzung enthaltend Wasserglas, organische Ammoniumverbindung, Füllstoff und gegebenenenfalls polymeren Binder.

Aus der DE-A-199 25 412 ist ein silikatgebundender Anstrich bekannt, der neben einem Silikat-Bindemittel mindestens eine wasserlösliche organische Stickstoffverbindung als Stabilisator und gegebenenfalls ein wasserdispergierbares bzw. wasserlösliches Bindemittel; beispielsweise Polyvinylacetat, enthält.

Diese vorbekannten Formulierungen enthalten Pigmente und/oder Füllstoffe, Wasserglas und in der Regel auch Polymerdispersionen. Bedingt durch den hohen Wasserglasanteil sind diese Formulierungen stark alkalisch und es werden keine zusätzlichen Konservierungsmittel benötigt. Die einzusetzenden Polymerdispersionen müssen allerdings bei hohen pH-Werten verseifungsstabil sein. Daher wurden in diesen Systemen bisher hauptsächlich Styrol / AcrylatCopolymere oder Poly(meth)acrylate verwendet, da sich diese dank ihrer guten Verseifungsbeständigkeit anderen Polymertypen als überlegen gezeigt haben.

Es zeigte sich aber, daß das Pigmentbindevermögen und Geruch solcher Dispersionen deutlich eingeschränkt ist gegenüber Systemen mit Bindemittel auf der Basis von Vinylestern, beispielsweise Vinylacetat-Ethylen-Copolymerdispersionen ("VAE-Copolymerdispersionen"). Beim Einsatz von VAE-Copolymerdispersionen hat sich allerdings gezeigt, daß diese sich für sehr hohe pH-Bereiche nur bedingt eignen, da die mit ihnen hergestellten Formulierungen nicht ausreichend verseifungsstabil und lagerbeständig sind.

Eine Aufgabe der vorliegenden Erfindung liegt in der Bereitstellung einer konservierungsmittelfreien Beschichtungszusammensetzung, die ausreichend verseifungsstabil und lagerbeständig ist.

Eine weitere Aufgabe der vorliegenden Erfindung liegt in der Bereitstellung von pigment- und/oder füllstoffhaltigen Beschichtungszusammensetzungen, die hohe Pigmentvolumenkonzentrationen (PVK) von mindestens 60 %, aufweisen und die ein hohes Pigmentbindevermögen besitzen.

Eine weitere Aufgabe der vorliegenden Erfindung liegt in der Bereitstellung einer konservierungsmittelfreien Beschichtungszusammensetzung, die bei Lagerung möglichst wenig ihren pH-Wert und das thixotrope Verhalten ändert und bei der die Bildung von geruchsbildenden Bestandteilen weitgehend unterdrückt wird.

Noch eine Aufgabe der vorliegenden Erfindung bestand in der Bereitstellung eines einfachen und wirtschaftlichen Verfahrens zur Herstellung von konservierungsmittelfreien Beschichtungszusammensetzungen.

Es wurde nun in überraschender Weise gefunden, daß durch den Einsatz ausgewählter Copolymerer die vorgenannten Aufgaben gelöst werden können.

Gegenstand der Erfindung sind konservierungsmittelfreie wässrige Beschichtungsmittel mit einem pH-Wert von mindestens 10 enthaltend
a) mindestens ein stark basisches Agens zum Einstellen des pH-Werts, insbesondere mindestens ein wasserlösliches Silikat,
b) mindestens eine Emulsion eines Copolymeren, abgeleitet von
   A1) Vinylestern von aliphatischen, gesättigten Carbonsäuren mit einer Kettenlänge von C₁-C₄, insbesondere Vinylacetat,
   A2) alpha-Olefinen mit 2 bis 8 C-Atomen, insbesondere Ethylen, und
   A3) Vinylestern von aliphatischen, gesättigten Carbonsäuren mit einer Kettenlänge von C₅-C₁₈, insbesondere Vinylestern von α-verzweigten Carbonsäuren mit 5 bis 11 Kohlenstoffatomen im Säurerest (^{®}Versaticsäuren),
   A4) gegebenenfalls bis zu 5 Gew. % an ethylenisch ungesättigten und Silangruppen enthaltenden Monomeren, sowie
   A5) gegebenenfalls weiteren Comonomeren,
   wobei die Summe der Komponenten A1, A2 und A3 und gegebenenfalls A4 und/oder A5) 100 Gew.-% ergeben,
c) 20 bis 95 Gew. % an Pigment und/oder Füllstoff, und
d) gegebenenfalls weitere an sich übliche Additive.

Als Komponente a) der erfindungsgemäßen Beschichtungszusammensetzung kann jede wasserlösliche starke Base eingesetzt werden, mit der die Zusammensetzung auf einen pH-Wert von mindestens 10 eingestellt werden kann.

Der pH-Wert der erfindungsgemäßen Zusammensetzung beträgt mindestens 10, vorzugsweise 10,5 bis 14 und ganz besonders bevorzugt 11 bis 13.

Beispiele für wasserlösliche starke Basen der Komponente a) sind Alkalihydroxide, wie Lithium-, Natrium- oder Kaliumhydroxid, Puffersysteme mit Pufferbereichen von mindestens pH 10, wie Phosphatpuffer mit Pufferbereichen von mindestens pH 10 oder wässrige Alkalihydroxidlösungen mit Aminosäuren, wie Glycin, die als Puffer mit Pufferbereich von mindestens 10 wirken, und insbesondere wasserlösliche Silikate.

Bevorzugte Komponente a) ist ein wasserlösliches Silikat. Dabei handelt es sich typischerweise um ein wasserlösliches Alkalisilikat, beispielsweise ein Lithium-, Natrium oder vorzugsweise ein Kaliumsilikat. Die pH-Werte der wässrigen Lösungen der Komponente a) bewegen sich typischerweise im Bereich von 10,0 bis 13,5. Der Gehalt an Alkalisilikat beträgt typischerweise 5 bis 50 Gew. %, bezogen auf die wässrige Lösung.

Bevorzugt eingesetzte Komponente a) ist Kaliumwasserglas.

Der Anteil der Komponente a) im erfindungsgemäßen Beschichtungsmittel beträgt typischerweise bis zu 5 Gew.-%, vorzugsweise 0,5 bis 3 Gew. %, insbesondere 0,5 bis 2, 0 Gew. %, bezogen auf den Gesamtfeststoffgehalt.

Die erfindungsgemäß eingesetzte wässrige copolymere Polyvinylester-Dispersion zeichnet sich durch eine hohe Verseifungsstabilität bei hohen pH-Werten aus. Ohne an eine Theorie gebunden zu sein wird angenommen, daß anfänglich eine Verseifung der Polymerteilchen stattfindet, wobei wasserunlösliche Verseifungsprodukte entstehen, die dann eine Schutzschicht vor einer weitergehenden Verseifung bilden.

Diese Copolymeren leiten sich ab von Monomeren der Typen A1, A2, A3 und gegebenenfalls A4 und/oder gegebenenfalls A5).

Bei den Vinylestern A1 von aliphatischen gesättigten Carbonsäuren der Kettenlänge C₁-C₄ handelt es sich um Vinylester von geradkettigen oder verzweigten aliphatischen Carbonsäuren, beispielsweise um Vinylformiat, Vinylacetat, Vinylpropionat, Vinylbutyrat oder Vinylisobutyrat. Vinylacetat ist bevorzugt. Die Vinylester A1 können im Polyvinylester auch in Kombination von zwei oder mehreren davon nebeneinander vorliegen.

Der Anteil der Monomeren A1, gegebenenfalls in Kombination mit weiteren Comonomeren aus dieser Gruppe, beträgt 40 bis 95 Gew.-%, vorzugsweise 50 bis 76 Gew. %, bezogen auf die Gesamtmenge der eingesetzten Monomeren.

Bei den alpha-Olefinen mit 2 bis 8 C-Atomen A2 handelt es sich um verzweigte oder um geradkettige alpha-Olefine, beispielsweise um Prop-1-en, But-1-en, Pent-1-en, Hex-1-en. Hept-1-en, Oct-1-en und insbesondere um Ethylen,

Der Anteil der Monomeren A2, gegebenenfalls in Kombination mit weiteren Comonomeren aus dieser Gruppe, beträgt bis zu 45 Gew.-%. bevorzugt 5 bis 45 Gew_-%, besonders bevorzugt 8 bis 25 Gew. %, ganz besonders bevorzugt 10 bis 20 Gew.-%, bezogen auf die Gesamtmenge der eingesetzten Monomeren.

Bei den Vinylestern A3 von aliphatischen gesättigten Carbonsäuren der Kettenlänge C₅-C₁₈ handelt es um Vinylester von geradkettigen oder vorzugsweise von verzweigten aliphatischen Carbonsäuren, beispielsweise um Vinylester von α-verzweigten Carbonsäuren mit 5 bis 11 Kohlenstoffatomen im Säurerest (^{®}Versaticsäuren), die Vinylester der Pivalin-, 2-Ethylhexan-, Laurin-, Palmitin-, Myristin- und Stearinsäure. Vinylester von Versaticsäuren, insbesondere VeoVa^{®} 9, VeoVa^{®} 10 und VeoVa^{®} 11, sind bevorzugt. Die Vinylester A3 können im Polyvinylester auch in Kombination von zwei oder mehreren davon nebeneinander vorliegen.

Der Anteil der Monomeren A3, gegebenenfalls in Kombination mit weiteren Comonomeren aus dieser Gruppe, beträgt 2 bis 60 Gew.-%, bevorzugt 2 bis 40 Gew.-%, besonders bevorzugt 4 bis 30 Gew. %, ganz besonders bevorzugt 5 bis 25 Gew.-%, bezogen auf die Gesamtmenge der eingesetzten Monomeren.

Bei den ethylenisch ungesättigten Silangruppen enthaltenden Monomeren A4 handelt es sich typischerweise um Monomere der allgemeinen Formel RSi(CH₃)₀₋₂(OR¹)₃₋₁, wobei R die Bedeutung CH₂=CR²-(CH₂)₀₋₁ oder CH₂=CR²CO₂-(CH₂)₁₋₃ hat, R¹ ein unverzweigter oder verzweigter, gegebenenfalls substituierter Alkylrest mit 1 bis 12 C-Atomen ist, der gegebenenfalls durch eine Ethergruppe unterbrochen sein kann, und R² für H oder CH₃ steht.

Bevorzugt sind Silane der Formeln CH₂=CR²-(CH₂)₀₋₁Si(CH₃)₀₋₁(OR¹)₃₋₂ und CH₂=CR²CO₂-(CH₂)₃Si(CH₃)₀₋₁(OR¹)₃₋₂, wobei R¹ ein verzweigter oder unverzweigter Alkylrest mit 1 bis 8 C-Atomen ist und R² für H oder CH₃ steht.

Besonders bevorzugte Silane sind Vinylmethyl-dimethoxy-silan, Vinylmethyldiethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxyisopropyloxy)-silan und Vinylmethyldioctyloxy-silan.

Insbesondere bevorzugt sind Silane der Formel CH₂=CR²-(CH₂)₀₋₁Si(OR¹)₃ und CH₂=CR²CO₂-(CH₂)₃Si(OR¹)₃, wobei R¹ für einen verzweigten oder unverzweigten Alkylrest mit 1 bis 4 C-Atomen und R² für H oder CH₃ steht.

Beispiele hierfür sind γ-(Meth)acryloxypropyl-tris-(2-methoxyethoxy)-silan, γ-(Meth)acryloxypropyl-tris-methoxy-silan, γ-(Meth)acryloxypropyl-tris-ethoxy-sifan, γ-(Meth)acryloxypropyt-tris-n-propoxy-silan, γ-(Meth)acryloxypropyl-tris-iso-propoxy-silan, γ-(Meth)acryloxypropyl-tris-butoxy-silan, γ-Acryloxypropyl-tris-(2-methoxyethoxy)-silan, γ-Acryloxypropyl-tris-methoxy-silan, γ-Acryloxypropyl-tris-ethoxy-silan, γ-Acryloxypropyl-tris-n-propoxy-silan, γ-Acryloxypropyl-tris-iso-propoxy-silan, γ-Acryloxypropyl-tris-butoxy-silan, sowie Vinyl-tris-(2-methouyethoxy)-silan, Vinyl-tris-methoxy-silan, Vinyl-tris-ethoxy-silan, Vinyl-tris-n-propoxy-silan, Vinyl-trisiso-propoxy-silan und Vinyl-tris-butoxy-silan. Die genannten Silanverbindungen können gegebenenfalls auch in Form ihrer (Teil)hydrolysate eingesetzt werden.

Der Anteil der Monomeren A4, gegebenenfalls in Kombination mit weiteren Comonomeren aus dieser Gruppe, beträgt bevorzugt 0,05 bis 5 Gew.-%, besonders bevorzugt 0,1 bis 2 Gew.-%, bezogen auf die Gesamtmenge der eingesetzten Monomeren.
Anstelle von oder zusätzlich zu den Monomeren A4 können dem erfindungsgemäßen Beschichtungsmittel weitere Silane, wie Aminosilane oder Epoxisilane, zugegeben werden. Dieses kann während oder insbesondere nach der Herstellung des Copolymeren erfolgen.

Geeignete Comonomere der Gruppe A5 besitzen vorzugsweise mindestens eine stabilisierende nichtionische oder ionische Gruppe, vorzugsweise eine Säuregruppe im Molekül, die das Emulsionspolymer zusätzlich über polymergebundene funktionelle Gruppen und/oder Ladungen stabilisieren.

Als Comonomere A5 mit stabilisierenden nichtionischen Gruppen eignen sich insbesondere Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acryl-säureester mit Dimethylaminoethanol, sowie (Meth)acrylsäureester mit zweiwertigen aliphatischen Alkoholen der Kettenlänge C₂-C₁₈, bei denen nur eine Alkoholgruppe verestert ist.

Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Als Comonomere A5 mit stabilisierenden ionischen Gruppen eignen sich ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden.

Beispiele dafür sind Acrylsäure, Methacrylsäure, Crotonsäure; Maleinsäure, Fumarsäure, Itaconsäure, Vinylsulfonsäure, Styrolsulfonsäure, Halbester der Malein- bzw. Fumarsäure und der Itaconsäure mit einwertigen aliphatischen gesättigten Alkoholen der Kettenlänge C₁-C₁₈ sowie deren Alkali- und Ammoniumsalze oder (Meth)acrylsäureester von Sulfoalkanolen, beispielsweise Natrium-2-sulfoethylmethacrylat.

Besonders bevorzugt sind Acrylsäure, Methacrylsäure, Crotonsäure, Itaconsäure und/oder Vinylsulfonsäure.

Zu weiteren Comonomeren A5, die im Copolymerisat Verwendung finden können, sind beliebige Comonomere einsetzbar, die nicht den Gruppen A1, A2, A3 oder A4 angehören. Beispiele dafür sind Ester aliphatischer Carbonsäuren der Kettenlänge C₃-C₁₂ mit ungesättigten Alkoholen der Kettenlänge C₃-C₁₈, die Acrylsäure- und Methacrylsäureester von einwertigen aliphatischen gesättigten Alkoholen, Vinylchlorid, Vinylidenchlorid, Acrylnitril und Methacrylnitril, Butadien, Isopren, C₉-C₁₆ alpha-Olefine, 2-Chlorbutadien, 2,3-Dichlorbutadien, Tetrafluorethylen, Styrol, Vinylether von einwertigen aliphatischen gesättigten Alkoholen der Kettenlänge C₁-C₁₈, Divinyl- und Diallylester von gesättigten und ungesättigten aliphatischen Dicarbonsäuren der Kettenlänge C₃-C₁₈, Vinyl- und Allylester der Acrylsäure und Crotonsäure, Triallylcyanurat und ethylenisch ungesättigte Epoxidverbindungen, wie Glycidylmethacrylat oder Glycidylacrylat. Bevorzugt sind als weitere Comonomere A5 Acrylsäureester einwertiger aliphatischer gesättigter Alkohole der Kettenlänge C₄-C₈- oder C₁₄-C₁₆ alpha-Olefine oder Butadien oder ethylenisch ungesättigte Epoxidverbindungen.

Die Menge der gegebenenfalls vorhandenen weiteren Comonomeren A5, gegebenenfalls in Kombination mit weiteren Comonomeren aus dieser Monomergruppe, beträgt typischerweise bis zu 10 Gew.-% , vorzugsweise bis zu 8 Gew.-%. bezogen auf die gesamte Copolymerzusammensetzung A).

Die Comonomeren A5 können im Polyvinylester auch in Kombination von zwei oder mehreren davon nebeneinander vorliegen.

Vorzugsweise wird zusätzlich zu den obengenannten Monomer-Gruppen A1, A2, A3 und gegebenenfalls A4 mindestens ein weiteres Comonomer der Gruppe A5, insbesondere Vinylsulfonsäure oder deren Alkalisalze, verwendet.

Die erfindungsgemäß eingesetzten Vinylestercopolymeremulsionen enthalten mindestens ein Schutzkolloid und/oder mindestens einen Emulgator. Vorzugsweise sind Schutzkolloid und Emulgator enthalten.

Als Schutzkolloid, also als polymerer Stabilisator, eignen sich Methylcellulosen, Hydroxyethyl- und Propylcellulosen sowie Natriumcarboxy-methylcellulose, Gelatine, Kasein, Stärke. Gummi arabicum, Hydroxyethylstärke, Natriumalginat, sowie Homo- oder Copolymerisate abgeleitet von (Meth)acrylsäuren und/oder -ester sowie N-Vinylamide, einschließlich der N-Vinyllactame und/oder die wasserlöslichen Salze dieser Homo- oder Copolymeren. Beispiele für (Meth)acrylsäuren sind Polyacrylsäure und/oder Polymethacrylsäure, Beispiele für N-Vinylamide sind N-Vinylpyrrolidon und N-Vinylacetamid.

Das bevorzugte Schutzkolloid ist Polyvinylalkohol. Geeigneter Polyvinylalkohol besitzt Hydrolysegrade von 60 bis 100 mol-% und Viskositäten der 4 %igen wässrigen Lösungen bei 20 °C von 2 - 70 mPa*s, insbesondere 30 bis 70 mPa*s.

Die genannten Schutzkolloide können selbstverständlich auch in Form von Gemischen verwendet werden.

Die verwendete Menge der Schutzkolloide, bezogen auf das Copolymer b), beträgt typischerweise 0,1 bis 15 Gewichtsteile, vorzugsweise 0,3 bis 1 Gewichtsteile.

Als Emulgatoren werden in der Regel nichtionische Emulgatoren oder Kombinationen von nichtionischen mit ionischen Emulgatoren eingesetzt.

Beispiele für nichtionische Emulgatoren sind Acyl-, Alkyl-, Oleyl- und Alkylaryloxethylate. Diese Produkte sind beispielsweise im Handel unter der Bezeichnung Genapol^{®} oder Lutensol^{®} erhältlich. Hierunter fallen beispielsweise ethoxilierte Mono-, Di- und Tri-Alkylphenole (EO-Grad: 3 bis 50, Alkyl-substituentenrest: C₄ bis C₁₂) sowie ethoxilierte Fettalkohole (EO-Grad: 3 bis 80; Alkylrest: C₈ bis C₃₆), speziell C₁₂-C₁₄-Fettalkohol(3-8)ethoxilate, C₁₃C₁₅-Oxoalkohol(3-30)ethoxilate, C₁₆C₁₈-Fettalkohot(11-80)ethoxilate, C₁₀-Oxoalkohol(3-11)ethoxilate, C₁₃-Oxoalkohol(3-20)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-20)-Ether von Oleylalkohol sowie die Polyethenoxid(4-20)-Ether von Nonylphenol. Besonders geeignet sind die Polyethylenoxid(4-20)-Ether von Fettalkoholen, insbesondere von Oleylalkohol:

An nichtionischen Emulgatoren werden typischerweise 0,1 bis 10 Gewichtsteile, vorzugsweise 0,5 bis 5,0 % bezogen auf das Copolymer A) verwendet. Es lassen sich auch Gemische von nichtionischen Emulgatoren einsetzen.

Zur weiteren Verbesserung der Stabilität ist es auch möglich, weitere, in diesem Fall ionische, vorzugsweise anionische Stabilisatoren als Co-Emulgator mitzuverwenden. Beispielhaft genannt seien Natrium-, Kalium- und Ammoniumsalze von geradkettigen aliphatischen Carbonsäuren der Kettenlänge C₁₂-C₂₀, Natrium-hydroxyoctadecansulfonat, Natrium-, Kalium- und Ammoniumsalze von Hydroxyfettsäuren der Kettenlänge C₁₂-C₂₀ und deren Sulfierungs- und/oder Acetylierungsprodukte, Alkylsulfate, auch als Triethanolaminsalze, Alkyl-(C₁₀-C₂₀)-sulfonate, Alkyl(C₁₀-C₂₀)-arylsulfonate Dimethyldialkyl(C₈-C₁₈)-ammoniumchlorid, und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylen-glykolethem von einwertigen aliphatischen Alkoholen der Kettenlänge C₁₀-C₁₂ (Di-Natriumsalz), Sulfobernsteinsäure-4-Ester mit Polyethylenglykolnohyl-phenylether (Di-Natriumsalz), Sulfobernsteinsäure-bis-cyclohexylester (Natriumsalz), Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenyletherdisulfonsaures Natrium sowie Natriumlaurylsulfat, oder ethoxyliertes Natriumlaurylethersulfat (EO-Grad 3)

Es lassen sich auch Gemische von ionischen Emulgatoren einsetzen.

Typischerweise beträgt der Anteil an ionischen Emulgatoren, bezogen auf die Gesamtmenge der eingesetzten Emulgatoren, 0,1 bis 5 Gewichtsteile, vorzugsweise 0,5 bis 3,0 Gew. %, bezogen auf das Copolymer b).

Die erfindungsgemäß eingesetzten wässrigen copolymeren Polyvinylester-Dispersionen besitzen typischerweise Feststoffgehalte von 20 bis 70 Gew.-%, vorzugsweise 30 bis 65 Gew.-%, und besonders bevorzugt 40 bis 60 Gew.-%.

Der Anteil der Komponente b) im erfindungsgemäßen Beschichtungsmittel beträgt typischerweise 5 bis 50 Gew.%, vorzugsweise 10 bis 50 Gew.-%, besonders bevorzugt 15 bis 30 Gew. %, bezogen auf den Gesamtfeststoffgehalt.

Als Komponente c) enthält das erfindungsgemäße Beschichtungsmittel Pigmente und/oder Füllstoffe. Dabei handelt es sich um feinteilige Feststoffe anorganischer oder organischer Natur, die gefärbt oder ungefärbt sind.

Beispiele für Pigmente sind anorganische Pigmente, wie Titandioxid, Zinkdioxid, Zinksulfid, Eisenoxide und/oder Ruß oder organische Pigmente. Bevorzugt wird Titandioxid.

Beispiele für Füllstoffe sind Carbonate, wie Dolomit, Calcit und Kreide. Weitere Beispiele sind Silikate, wie Talkum, Kaolin, China Clay und Glimmer. Bevorzugt werden Calciumcarbonat und Glimmer.

Der Anteil der Komponente c) im erfindungsgemäßen Beschichtungsmittel beträgt typischerweise 20 bis 95 Gew.-%, bevorzugt 20 bis 90 Gew.-%, und besonders bevorzugt 30 bis 87 Gew. %, bezogen auf den Gesamtfeststoffgehalt.

Gegebenenfalls enthalten die erfindungsgemäßen Beschichtungsmittel noch weitere an sich übliche Zusätze d).

Als Additive und weitere Bestandteile können Filmbildehilfsmittel, wie Testbenzin, Texanol^{®}, TxiB^{®}, Butylglykol, Butyldiglykol, Butyldipropylenglykol und Butyltripropylenglykol; Weichmacher, wie Dimethylphthalat, Disobutylphthalat, Adipinsäuredüsobutylester, Coasol B^{®} und Plastilit 3060^{®}; Netzmittel, wie AMP 90^{®}, TegoWet.280^{®}, Fluowet PE^{®}; Verdicker, wie Polyacrylate oder Polyurethane, wie Borchigel L75^{®} und Tafigel PUR 60^{®}; Entschäumer, z.B. Mineralöl- oder Silikonentschäumer; UV-Schutzmittel, wie Tinuvin 1130^{®} und andere Additive und Hilfsmittel, wie sie zur Formulierung von Beschichtungsmassen üblich sind verwendet werden.

Der Anteil der Komponente d) im erfindungsgemäßen Beschichtungsmittel kann bis zu 25 Gew.-%, vorzugsweise 2 bis 15 Gew. %, und insbesondere 5 bis 10 Gew. %, bezogen auf den Gesamtfeststoffgehalt, betragen.

Im Gegensatz zu bislang üblichen Beschichtungszusammensetzungen kann bei den erfindungsgemäßen Zusammensetzungen auf den Einsatz von Konservierungsmitteln verzichtet werden.

Die minimale Filmbildetemperatur der erfindungsgemäßen Beschichtungsmittel liegt typischerweise unter 25 °C, vorzugsweise unter 15 °C. Die Filmbildetemperatur kann durch Zusatz an sich bekannter Koaleszenzmittel modifziert und gezielt eingestellt werden.

Besonders bevorzugt enthält das erfindungsgemäße Beschichtungsmittel eine Komponente b) abgeleitet von A1) Vinylacetat, A2) Ethylen, A3) Vinylestern verzweigter aliphatischer Carbonsäuren mit 9 bis 11 Kohlenstoffatomen, gegebenenfalls ethylenisch ungesättigten und Silangruppen enthaltenden Monomeren A4) und gegebenenfalls A5) ethylenisch ungesättigen Carbonsäuren mit ein oder zwei Carboxylgruppen, ethylenisch ungesättigen Sulfonsäuren mit einer Sulfonsäuregruppe oder deren Salzen, wobei der Gehalt an von Vinylacetat abgeleiteten wiederkehrenden Struktureinheiten im Copolymer 50 bis 70 Gew. %, an von Ethylen abgeleiteten wiederkehrenden Struktureinheiten im Copolymer 15 bis 20 Gew. %, an von Vinylestern verzweigter aliphatischer Carbonsäuren mit 9 bis 11 Kohlenstoffatomen abgeleiteten wiederkehrenden Struktureinheiten im Copolymer 10 bis 40 Gew. %, an gegebenenfalls von ethylenisch ungesättigten und Silangruppen enthaltenden Monomeren A4) abgeleiteten wiederkehrenden Struktureinheiten im Copolymer - falls vorhanden - bis zu 5 Gew. %, und an gegebenenfalls von ethylenisch ungesättigen Carbonsäuren mit ein oder zwei Carboxylgruppen, ethylenisch ungesättigen Sulfonsäuren mit einer Sulfonsäuregruppe oder deren Salzen abgeleiteten wiederkehrenden Struktureinheiten im Copolymer - falls vorhanden - bis zu 5 Gew. %, beträgt.

Gegenstand dieser Erfindung ist weiterhin ein Verfahren zur Herstellung der erfindungsgemäßen Beschichtungsmittel.

Die Erfindung betrifft daher auch ein Verfahren zur Herstellung von wässrigen Beschichtungsmitteln umfassend das Vermischen der oben definierten Komponenten a), b), gegebenenfalls c) und gegebenenfalls d).

Komponente b) wird typischerweise durch radikalische Emulsionspolymerisation hergestellt. Dieses kann im Batchverfahren, im Zulaufverfahren, im kombinierten Batch/Zulauf-Verfahren oder im kontinuierlichen Verfahren durchgeführt werden.

Vorzugsweise wird jedoch im kombinierten Batch/Zulauf-Verfahren oder besonders bevorzugt, im Zulaufverfahren gearbeitet, wobei üblicherweise ein Teil der Monomeren (1 bis 15 Gew. %) zum Starten der Polymerisation vorgelegt werden. Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen eine Saatpolymerisation durchzuführen.

Als radikalische Initiatoren werden beispielsweise verwendet: Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen aliphatischen Carbonsäuren der Kettenlänge C₈-C₁₂, Tertiärbutylhydroperoxid, Ditertiärbutylperoxid, Diisopropylpercarbonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Methanhydroperoxid. Die vorgenannten Verbindungen können auch innerhalb eines Redoxsysteme verwendet werden, wobei Übergangsmetallsalze wie Eisen-II-salze oder andere Reduktionsmittel mitverwendet werden. Als Reduktionsmittel bzw. Regler können Alkalisalze der Oxymethansulfinsäure, Mercaptane der Kettenlänge C₁₀-C₁₄, Buten-(I)-ol-(3), Hydroxylaminsalze, Natriumdialkyldithiocarbamat, Natriumbisulfit, Ammoniumbisulfit, Natriumdithionit, Düsopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Das zur Stabilisierung verwendete Schutzkolloid kann ebenfalls entweder zu Beginn der Polymerisation komplett vorgelegt oder partiell vorgelegt und partiell dosiert oder komplett während der Polymerisation zudosiert werden.

Der zur Stabilisierung mitverwendete Emulgator kann ebenfalls entweder zu Beginn der Polymerisation komplett vorgelegt oder partiell vorgelegt und partiell dosiert oder komplett während der Polymerisation zudosiert werden.

Der pH-Wert der Dispersion liegt typischerweise zwischen 2 und 7, vorzugsweise zwischen 2,5 und 6.

Die Polymerisationstemperatur bewegt sich typischerweise im Bereich von 20 bis 120°C, vorzugsweise im Bereich von 30 bis 110°C und ganz besonders bevorzugt im Bereich von 45 bis 95°C.

Nach Abschluss der Polymerisation kann zur Entmonomerisierung eine weitere, vorzugsweise chemische Nachbehandlung, insbesondere mit Redoxkatatysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d. h. destillative Entfernung (insbesondere über Wasserdampfdestillation) oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm gestattet.

Die erfindungsgemäßen wässrigen Beschichtungsmittel eignen sich zum Beschichten von Substraten aller Art, beispielsweise als Farben, vorzugsweise im Baubereich.

Diese Verwendungen sind ebenfalls Gegenstand der vorliegenden Erfindung.

Die nachfolgenden Beispiele dienen der Erläuterung der Erfindung. Die in den Beispielen angegebenen Teile und Prozente beziehen sich auf das Gewicht, soweit nicht anders vermerkt.

### Vergleichsbeispiel 1

### Herstellung einer nicht erfindungsgemäß verwendbaren Vinylacetat / Ethylen-Copolymerisatdispersion mit nachfolgender Restmonomereneliminierung

In eine Druckapparatur mit Rührer, Mantelheizung und Dosierpumpen wurde eine wässrige Lösung, bestehend aus folgenden Bestandteilen, eingegeben:

26600 g Wasser, 86 g Natriumacetat, 1440 g einer 70 gew. %igen wässrigen Lösung eines Oxoalkylethoxylats mit 28 Mol Ethylenoxid, 2160 g einer 10 gew. %-igen wässrigen Polyvinylalkohollösung (Viskosität der 4 gew.%igen wässrigen Lösung 18 mPa*s), 577 g einer 30 gew. %-igen wässrigen Natriumvinylsulfonatlösung und 8 g einer 1 gew. %-igen wässrigen Lösung von Fe-II(SO₄) x 7 H₂O. Der pH-Wert der Lösung betrug 7,2. Die Apparatur wurde von Luftsauerstoff befreit und es wurde Ethylen in die Apparatur gedrückt. Bei 20 bar Ethylendruck wurden 1500 g Vinylacetat eindosiert. Es wurde auf 60° C Innentemperatur erhitzt und dabei der Ethylertdruck auf 40 bar gesteigert. Nun wurden 10% einer Lösung aus 27,1 g Brüggolit C in 2000 g Wasser eindosiert. Anschließend wurden 10% einer Lösung aus 27,1 g t-Butylhydroperoxid in 2000 g Wasser zudosiert bei einer Innentemperatur von 60° C und es wurde zur Abführung der Reaktionswärme gekühlt. 28800 g Vinylacetat und die restlichen 90 % der Reduktions- und Initiatorlösung wurden anschließend, wobei der Ethylendruck auf 40 bar gehalten wurde, bis 3744 g Ethylen im Reaktor waren, zudosiert. Danach wurde eine Lösung aus 36 g Natriumpersulfat in 600 g Wasser zudosiert und die Innentemperatur auf 80° C erhöht und 1 Stunde bei dieser Temperatur gehalten. Unter Rühren wurde anschließend der Großteil des nicht umgesetzten Ethylens ausgegast und es wurden 2 I Wasser zugegeben. Dann wurden unter Anlegen von Vakuum innerhalb von 2 Stunden 2 I Wasser abdestilliert, wodurch der Restvinylacetatgehalt der Dispersion auf 0,05 Gew. %, bezogen auf die Dispersion, reduziert wurde. Durch Wiederholung des Trennverfahrens wurde ein Restvinylacetatgehalt von 0,012 Gew. % erreicht.

### Beispiele 2 bis 11

### Herstellung von erfindungsgemäß verwendbaren Vinylacetat / Ethylen / VeoVa10-Copolymerisatdispersionen mit nachfolgender Eliminierung von Restmonomeren und sonstigen leichtflüchtigen Bestandteilen.

Es wurde in der Apparatur und nach der Methode des Vergleichsbeispiels 1 polymerisiert mit der Abänderung, daß die Gesamtmenge von 34044 g Monomer durch eine Mischung mit verschiedenen Gehalten von Vinylacetat, VeoVa10 und Ethylen (vergl. Tabelle 1) ersetzt wurde. Im einzelnen wurden somit folgende Mengen (in % bezogen auf 34044 g) an Monomer copolymerisiert:

**Tabelle 1**

| Beispiel Nr. | Vinylacetat (%) | Ethylen (%) | VeoVa10 (%) |
|---|---|---|---|
| V1 | 88,8 | 11,2 | 0 |
| 2 | 69,8 | 15,2 | 15 |
| 3 | 75,8 | 19,2 | 5 |
| 4 | 55,8 | 19,2 | 25 |
| 5 | 83,8 | 11,2 | 5 |
| 6 | 63,8 | 11,2 | 25 |
| 7 | 83,8 | 11,2 | 5 |
| 8 | 69,8 | 15,2 | 15 |
| 9 | 75,8 | 19,2 | 5 |
| 10 | 63,8 | 11,2 | 25 |
| 11 | 55,8 | 19,2 | 25 |

**Tabelle 2: Physikalische Eigenschaften der hergestellten Polymerdispersionen**

| Beispiel Nr. | Feststoff (%) | pH-Wert | Teilchengröße (nm) | MFT (°C) | T_{g} (°C) |
|---|---|---|---|---|---|
| V1 | 50,2 | 4,4 | 177 | <0 | 14 |
| 2 | 50,1 | 4,4 | 139 | <0 | 2 |
| 3 | 50,0 | 4,4 | 153 | <0 | 1 |
| 4 | 50,1 | 4, 4 | 165 | <0 | -8 |
| 5 | 50,3 | 4,3 | 169 | <0 | 13 |
| 6 | 50, 3 | 4, 3 | 145 | <0 | 5 |
| 7 | 50,2 | 4,3 | 153 | <0 | 15 |
| 8 | 50,0 | 4, 4 | 162 | <0 | 3 |
| 9 | 50,1 | 4,4 | 142 | <0 | 0 |
| 10 | 50,2 | 4,3 | 148 | <0 | 4 |
| 11 | 49, 9 | 4,4 | 136 | <0 | -8 |

### Anwendungsbeispiele

Die Erfindung wird nachfolgend durch Formulierung von Dispersionsfarben mit untenstehender Zusammensetzung näher beschrieben:

| Bestandteile | Gewichtsteile |
|---|---|
| Wasser | 333,0 |
| Dispergiermittel (stabilisiertes Alkaliphosphat) | 2,0 |
| Celluloseether (Typ HEC, hochviskos) | 4,0 |
| wässrige Lösung eines quaternären Ammoniumsalzes | 3,0 |
| Entschäumer auf Mineralölbasis | 3,0 |
| Pigment Titandioxid | 150,0 |
| Füllstoff, Kalkstein, Teilchengröße 1 µm | 100,0 |
| Füllstoff, Kalkstein, Teilchengröße 6 µm | 180,0 |
| Füllstoff Glimmer, Teilchengröße 28 µm | 50,0 |
| Copolymerisatdispersion¹⁾ | 120,0 |
| 29 %-ige wässrige Kaliumsilikatlösung | 45,0 |
| Summe | 1090,0 |

| | |
|---|---|
| ¹⁾Es wurden die Copolymere der Beispiele V1 bis 11 verwendet (vergl. Tabelle 1) | |

Die pulverförmige Hydroxyethylcellulose wurde in das Wasser eingestreut und unter Rühren gelöst, dann wurden Dispergiermittel, Entschäumer auf Mineralölbasis und wässrige Lösung eines quaternären Ammoniumsalzes unter Rühren zugegeben. Unter Rühren mittels eines Dissolvers wurden die Pigmente und Füllstoffe eindispergiert und dann unter Steigerung der Rührgeschwindigkeit auf 5000 U/Min weiter bei 5000 U/Min. dispergiert, wobei die Temperatur der Pigment/Füllstoffpaste auf 60° C anstieg. Man ließ auf 30° C abkühlen. Bei geringer Rührung wurden nun die Copolymerisatdispersion und die wässrige Kaliumsilikatlösung eingerührt.

Die wesentlichen Charakteristika der unterschiedlichen Dispersionsfarben sind das Pigmentbindevermögen (WSR), der Geruch, die Thixotropie und die Änderung des pH-Wertes nach Wärmelagerung in der nach obiger Formulierung hergestellten Dispersionsfarbe (vergl. Tabelle 3)

**Tabelle 3:**

| Copolymer von Beispiel | WSR 28d¹⁾ | Ger 28d²⁾ | Thix 28d³⁾ | pH 1d RT⁴⁾ | pH 28d RT⁵⁾ | pH 28d 50°C⁶⁾ |
|---|---|---|---|---|---|---|
| V1 | 21 | 0 | 0/- | 11,3 | 9,8 | 9,8 |
| 2 | 18 | + | 0/- | 11,2 | 11,1 | 10,6 |
| 3 | 19 | 0/+ | + | 11,2 | 11,1 | 10,6 |
| 4 | 22 | 0/+ | + | 11,2 | 11,2 | 11,0 |
| 5 | 18 | 0 | -/- | 11,2 | 11,0 | 10,0 |
| 6 | 17 | 0/+ | 0 | 11,2 | 11,1 | 10,6 |
| 7 | 18 | + | -/- | 11,2 | 11,0 | 9,9 |
| 8 | 18 | + | 0/+ | 11,2 | 11,1 | 10,6 |
| 9 | 13 | 0 | 0/+ | 11,2 | 11,1 | 10,6 |
| 10 | 17 | + | 0 | 11,2 | 11,1 | 10,6 |
| 11 | 20 | +/++ | ++ | 11,2 | 11,2 | 11,0 |

| | | | | | | |
|---|---|---|---|---|---|---|
| ¹⁾ WSR 28d: Pigmentbindevermögen nach 28 Tagen Lagerung im Normklima bei Raumtemperatur; Angaben in µm ²⁾ Ger 28d: Geruch nach 28 Tagen Lagerung im Normklima bei Raumtemperatur; Beurteilung nach subjektiver Skala von - / - / 0 / + / ++ (sehr mangelhaft bis sehr gut) ³⁾Thix 28d: Thioxotropie nach 28 Tagen Lagerung im Normklima bei Raumtemperatur; Beurteilung nach subjektiver Skala von - /- /0/ + /++ (sehr mangelhaft bis sehr gut) ⁴⁾ pH 1d RT: pH-Wert nach 1 Tag Lagerung im Normklima bei Raumtemperatur ⁵⁾ pH 28d RT: pH-Wert nach 28 Tagen Lagerung im Normklima bei Raumtemperatur ⁶⁾ pH 28d 50°C: pH-Wert nach 28 Tagen Lagerung im Normklima bei 50°C | | | | | | |

Weitere Rezepturen von Dispersionsfarben untenstehender Zusammensetzung wurden geprüft:

**Tabelle 4:**

| Bestandteile | Gewichtsteile |
|---|---|
| Wasser | 343,0 |
| Dispergiermittel (stabilisiertes Alkaliphosphat) | 2,0 |
| Celluloseether (Typ HEC, hochviskos) | 4,0 |
| wässrige Lösung eines quaternären Ammoniumsalzes | 3,0 |
| Entschäumer auf Mineralölbasis | 3,0 |
| Pigment Titandioxid | 150,0 |
| Füllstoff, Kalkstein, Teilchengröße 1 µm | 100,0 |
| Füllstoff, Kalkstein, Teilchengröße 6 µm | 180,0 |
| Füllstoff Glimmer, Teilchengröße 28 µm | 50,0 |
| Copolymerisatdispersion¹⁾ | 120,0 |
| Base gemäß nachstehender Tabelle | 45,0 |

| | |
|---|---|
| ¹⁾ Es wurde das Copolymer des Beispieles 11 verwendet (vergl. Tabelle 1) | |

Von den beiden Farbrezepturen wurde der pH-Wert sowie der Scheuerverlust ausgeprüft. Die Ergebnisse finden sich in der nachstehenden Tabelle 5:

**Tabelle 5**

| Basisches Agens | Scheuerverlust nach 28d (µm)¹⁾ | pH 1d RT²⁾ | pH 28d 50°C³⁾ |
|---|---|---|---|
| NaOH | 27 | 12,7 | 12,4 |
| KOH | 25 | 12,5 | 12,1 |
| NaOH / KCI | 31 | 12,9 | 12,7 |
| NaOH / Glycin | 24 | 12,2 | 11,4 |

| | | | |
|---|---|---|---|
| ¹⁾ Scheuerverlust ermittelt nach DIN ISO 11998 und nach 28 Tagen Lagerung bei 50 %-iger Luftfeuchtigkeit bei 23°C; Probenvorbereitung: nach einem Tag wurden die Dispersionsfarben auf Lenetafolie aufgezogen; Messung: nach der Lagerung wurde mit einem Vliesabriebgerät Erichsen untersucht ²⁾ pH 1d RT: pH-Wert nach 1 Tag Lagerung im Normklima bei Raumtemperatur ³⁾ pH 28d 50°C: pH-Wert nach 28 Tagen Lagerung im Normklima bei 50°C | | | |

## Patentansprüche

1. Konservierungsmittelfreies wässriges Beschichtungsmittel mit einem pH-Wert von mindestens 10 enthaltend
a) mindestens ein stark basisches Agens zum Einstellen des pH-Werts,
b) mindestens eine Emulsion eines Copolymeren, die Schutzkolloid und/oder Emulgator enthält und die abgeleitet ist von
A1) Vinylestern von aliphatischen, gesättigten Carbonsäuren mit einer Kettenlänge von C₁-C₄,
A2) alpha-Olefinen mit 2 bis 8 C-Atomen, und
A3) Vinylestern von aliphatischen, gesättigten Carbonsäuren mit einer Kettenlänge von C₅-C₁₈,
A4) gegebenenfalls bis zu 5 Gew. % an ethylenisch ungesättigten und Silangruppen enthaltenden Monomeren, sowie
A5) gegebenenfalls weiteren Comonomeren,
wobei die Summe der Komponenten A1, A2 und A3 und gegebenenfalls A4 und/oder A5 100 Gew.-% ergeben,
c) 20 bis 95 Gew. % an Pigment und/oder Füllstoff, und
d) gegebenenfalls weitere an sich übliche Additive.

2. Beschichtungsmittel nach Anspruch 1, **dadurch gekennzeichnet, dass** Komponente A1) Vinylacetat ist.

3. Beschichtungsmittel nach Anspruch 1, **dadurch gekennzeichnet, dass** Komponente A2) Ethylen ist.

4. Beschichtungsmittel nach Anspruch 1, **dadurch gekennzeichnet, dass** Komponente A3) ein Vinylester von α-verzweigten Carbonsäuren mit 9 bis 11 Kohlenstoffatomen im Säurerest (^{®}Versaticsäure) ist.

5. Beschichtungsmittel nach Anspruch 1, **dadurch gekennzeichnet, dass** Komponente A4) ein Silan der Formeln CH₂=CR²-(CH₂)₀₋₁Si(CH₃)₀₋₁(OR¹)₃₋₂ und/oder CH₂=CR²CO₂-(CH₂)₃Si(CH₃)₀₋₁(OR¹)₃₋₂ ist, wobei R¹ ein verzweigter oder unverzweigter Alkylrest mit 1 bis 8 C-Atomen ist und R² für H oder CH₃ steht.

6. Beschichtungsmittel nach Anspruch 1, **dadurch gekennzeichnet, dass** Komponente A5) eine ethylenisch ungesättigte Carbonsäure mit ein oder zwei Carboxylgruppen und/oder eine ethylenisch ungesättigte Sulfonsäure mit einer Sulfonsäuregruppe oder ein Salz dieser Säuren ist, insbesondere Acrylsäure, Methacrylsäure, Crotonsäure, Itaconsäure und/oder Vinylsulfonsäure.

7. Beschichtungsmittel nach Anspruch 1, **dadurch gekennzeichnet, dass** dass Copolymer sich ableitet von Monomeren der Typen A1), A2), A3) und gegebenenfalls A4) und/oder A5).

8. Beschichtungsmittel nach Anspruch 1, **dadurch gekennzeichnet, dass** Komponente a) ein wasserlösliches Silikät ist.

9. Beschichtungsmittel nach Anspruch 1, **dadurch gekennzeichnet, dass** Komponente a) Kallumwasserglas ist.

10. Beschichtungsmittel nach Anspruch 1, **dadurch gekennzeichnet, dass** der Anteil von Komponente a) im erfindungsgemäßen Beschichtungsmittel bis zu 5 Gew.-% beträgt, bezogen auf den Gesamtfeststoffgehalt.

11. Beschichtungsmittel nach Anspruch 1, **dadurch gekennzeichnet, dass** Komponente b) von den Monomergruppen A1, A2, A3 und A5 abgeleitete oder oder A1, A2, A3, A4 und A5 abgeleitete wiederkehrende Struktureinheiten aufweist.

12. Beschichtungsmittel nach Anspruch 1, **dadurch gekennzeichnet, dass** Komponente b) mindestens ein Schutzkolloid und/oder mindestens einen Emulgator enthält, vorzugsweise Polyvinylalkohol.

13. Beschichtungsmittel nach Anspruch 1, **dadurch gekennzeichnet, dass** der Anteil von Komponente b) 5 bis 50 Gew.-% beträgt, bezogen auf den Gesamtfeststoffgehalt..

14. Beschichtungsmittel nach Anspruch 1, **dadurch gekennzeichnet, dass** Komponente c) ausgewählt wird aus der Gruppe bestehend aus Calciumcarbonat, Glimmer oder deren Kombinationen.

15. Beschichtungsmittel nach Anspruch 1, **dadurch gekennzeichnet, dass** der Anteil von Komponente c) 20 bis 95 Gew.% beträgt, bezogen auf den Gesamtfeststoffgehalt.

16. Beschichtungsmittel nach Anspruch 1, **dadurch gekennzeichnet, dass** Komponente b) sich ableitet von A1) Vinylacetat, A2) Ethylen, A3) Vinylestern verzweigter aliphatischer Carbonsäuren mit 9 bis 11 Kohlenstoffatomen gegebenenfalls ethylenisch ungesättigten und Silangruppen enthaltenden Monomeren A4) und gegebenenfalls A5) ethylenisch ungesättigen Carbonsäuren mit ein oder zwei Carboxylgruppen, ethylenisch ungesättigen Sulfonsäuren mit einer Sulfonsäuregruppe oder deren Salzen, wobei der Gehalt an von Vinylacetat abgeleiteten wiederkehrenden Struktureinheiten im Copolymer 50 bis 70 Gew. %, an von Ethylen abgeleiteten wiederkehrenden Struktureinheiten im Copolymer 15 bis 20 Gew. %, an von Vinylestern verzweigter aliphatischer Carbonsäuren mit 9 bis 11 Kohlenstoffatomen abgeleiteten wiederkehrenden Struktureinheiten im Copolymer 10 bis 40 Gew. %, an gegebenenfalls von ethylenisch ungesättigten und Silangruppen enthaltenden Monomeren A4) abgeleiteten wiederkehrenden Struktureinheiten im Copolymer - falls vorhanden - bis zu 5 Gew. %, und an und gegebenenfalls von ethylenisch ungesättigen Carbonsäuren mit ein oder zwei Carboxylgruppen, ethylenisch ungesättigen Sulfonsäuren mit einer Sulfonsäuregruppe oder deren Salzen abgeleiteten wiederkehrenden Struktureinheiten im Copolymer - falls vorhanden - bis zu 5 Gew. %, beträgt.

17. Verfahren zur Herstellung von wässrigen konservierungsmittelfreien Beschichtungsmitteln umfassend das Vermischen Komponenten a), b), gegebenenfalls c) und gegebenenfalls d) nach Anspruch 1.

18. Verfahren nach Anspruch 17, **dadurch gekennzeichnet, dass** als Komponente b) ein durch radikalische Emulsionspolymerisation hergestelltes Copolymer eingesetzt wird.

19. Verwendung der wässrigen konservierungsmittelfreien Beschichtungsmittel nach Anspruch 1 zum Beschichten von Substraten aller Art.

20. Verwendung nach Anspruch 19, **dadurch gekennzeichnet, dass** die wässrigen konservierungsmittelfreien Beschichtungsmittel als Farben eingesetzt werden.

## Claims

1. A preservative-free aqueous coating composition having a pH of at least 10, comprising
a) at least one strongly basic agent to set the pH,
b) at least one emulsion of a copolymer which comprises protective colloid and/or emulsifier and which is derived from
A1) vinyl esters of aliphatic saturated carboxylic acids having a chain length of C₁-C₄,
A2) alpha-olefins having 2 to 8 carbon atoms, and
A3) vinyl esters of aliphatic saturated carboxylic acids having a chain length of C₅-C₁₈,
A4) if desired, up to 5% by weight of ethylenically unsaturated monomers containing silane groups, and
A5) if desired, further comonomers,
the sum of components A1, A2 and A3 and where appropriate A4 and/or A5 making 100% by weight,
c) 20% to 95% by weight of pigment and/or filler, and
d) if desired, further additives customary per se.

2. The coating composition as claimed in claim 1, wherein component A1) is vinyl acetate.

3. The coating composition as claimed in claim 1, wherein component A2) is ethylene.

4. The coating composition as claimed in claim 1, wherein component A3) is a vinyl ester of α-branched carboxylic acids having 9 to 11 carbon atoms in the acid radical (^{®}Versatic acid).

5. The coating composition as claimed in claim 1, wherein component A4) is a silane of the formulae CH₂=CR²- (CH₂)₀₋₁Si(CH₃)₀₋₁(OR¹)₃₋₂ and/or CH₂=CR²-CO₂-(CH₂)₃Si(CH₃)₀₋₁(OR¹)₃₋₂, in which R¹ is a branched or unbranched alkyl radical having 1 to 8 carbon atoms and R² is H or CH₃.

6. The coating composition as claimed in claim 1, wherein component A5) is an ethylenically unsaturated carboxylic acid having one or two carboxyl groups and/or an ethylenically unsaturated sulfonic acid having one sulfonic acid group, or a salt of these acids, particularly acrylic acid, methacrylic acid, crotonic acid, itaconic acid and/or vinylsulfonic acid.

7. The coating composition as claimed in claim 1, wherein the copolymer derives from monomers of types A1), A2), A3), and, if desired, A4) and/or A5).

8. The coating composition as claimed in claim 1, wherein component a) is a water-soluble silicate.

9. The coating composition as claimed in claim 1, wherein component a) is potassium waterglass.

10. The coating composition as claimed in claim 1, wherein the fraction of component a) in the coating composition of the invention is up to 5% by weight, based an the total solids content.

11. The coating composition as claimed in claim 1, wherein component b) contains structural repeating units derived from the monomer groups A1, A2, A3, an A5 , or A1, A2, A3, A4, and A5.

12. The coating composition as claimed in claim 1, wherein component b) comprises at least one protective colloid and/or at least one emulsifier, preferably polyvinyl alcohol.

13. The coating composition as claimed in claim 1, wherein the fraction of component b) is 5% to 50% by weight, based on the total solids content.

14. The coating composition as claimed in claim 1, wherein component c) is selected from the group consisting of calcium carbonate, mica or combinations thereof.

15. The coating composition as claimed in claim 1, wherein the fraction of component c) is 20% to 95% by weight, based on the total solids content.

16. The coating composition as claimed in claim 1, wherein component b) derives from A1) vinyl acetate, A2) ethylene, A3) vinyl esters of branched aliphatic carboxylic acids having 9 to 11 carbon atoms, if desired, ethylenically unsaturated monomers A4) containing silane groups, and, if desired, A5) ethylenically unsaturated carboxylic acids having one or two carboxyl groups, ethylenically unsaturated sulfonic acids having one sulfonic acid group, or salts thereof, the amount of structural repeating units derived from vinyl acetate in the copolymer being 50% to 70% by weight, the amount of structural repeating units derived from ethylene in the copolymer being 15% to 20% by weight, the amount of structural repeating units derived from vinyl esters of branched aliphatic carboxylic acids having 9 to 11 carbon atoms in the copolymer being 10% to 40% by weight, the amount of structural repeating units derived, where appropriate, from ethylenically unsaturated monomers A4) containing silane groups in the copolymer being - if present - up to 5% by weight, and the amount of structural repeating units derived, where appropriate, from ethylenically unsaturated carboxylic acids having one or two carboxyl groups, ethylenically unsaturated sulfonic acids having one sulfonic acid group, or salts thereof, in the copolymer being - if present - up to 5% by weight.

17. A method of producing aqueous, preservative-free coating compositions, comprising the mixing of components a), b), if desired, c), and, if desired, d) as claimed in claim 1.

18. The method as claimed in claim 17, wherein as component b) a copolymer prepared by free-radical emulsion polymerization is used.

19. The use of the aqueous, preservative-free coating compositions as claimed in claim 1 to coat substrates of all kinds.

20. The use as claimed in claim 19, wherein the aqueous, preservative-free coating compositions are used as paints.

## Revendications

1. Substance aqueuse de revêtement exempte de conservateur avec une valeur de pH d'au moins 10 contenant
a) au moins un agent fortement basique pour ajuster la valeur du pH,
b) au moins une émulsion d'un copolymère, qui contient un colloïde protecteur et/ou un agent émulsifiant et qui est dérivé
A1) d'esters de vinyle d'acides carboxyliques aliphatiques, saturés avec une longueur de chaîne de C₁ à C₄,
A2) d'alpha-oléfines avec 2 à 8 atomes de carbone, et
A3) d'esters de vinyle d'acides carboxyliques aliphatiques, saturés avec une longueur de chaîne de C₅ à C₁₈,
A4) éventuellement jusqu'à 5 % en poids de monomères éthyléniquement insaturés et contenant des groupes silane, et
A5) éventuellement d'autres comonomères,
la somme des composants A1, A2 et A3 et éventuellement A4 et/ou A5 totalisant 100 % en poids,
c) 20 à 95 % en poids de pigment et/ou de charge, et
d) éventuellement d'autres additifs usuels en soi.

2. Substance de revêtement selon la revendication 1, **caractérisée en ce que** le composant A1) est l'acétate de vinyle.

3. Substance de revêtement selon la revendication 1, **caractérisée en ce que** le composant A2) est l'éthylène.

4. Substance de revêtement selon la revendication 1, **caractérisée en ce que** le composant A3) est un ester de vinyle d'acides carboxyliques a-ramifiés avec 9 à 11 atomes de carbone dans le résidu acide (acide ®Versatique).

5. Substance de revêtement selon la revendication 1, **caractérisée en ce que** le composant A4) est un silane des formules
CH₂=CR²-(CH₂)₀₋₁Si(CH₃)₀₋₁(OR¹)₃₋₂
et/ou
CH₂=CR²CO₂-(CH₂)₃Si(CH₃)₀₋₁(OR¹)₃₋₂, dans lesquelles R¹ est un radical alkyle ramifié ou non ramifié avec 1 à 8 atomes de carbone et R² représente H ou CH₃.

6. Substance de revêtement selon la revendication 1, **caractérisée en ce que** le composant A5) est un acide carboxylique éthyléniquement insaturé avec un ou deux groupes carboxyle et/ou un acide sulfonique éthyléniquement insaturé avec un groupe acide sulfonique ou un sel de ces acides, en particulier l'acide acrylique, l'acide méthacrylique, l'acide crotonique, l'acide itaconique et/ou l'acide vinylsulfonique.

7. Substance de revêtement selon la revendication 1, **caractérisée en ce que** le copolymère dérive de monomères des types A1), A2), A3) et éventuellement A4) et/ou A5).

8. Substance de revêtement selon la revendication 1, **caractérisée en ce que** le composant a) est un silicate hydrosoluble.

9. Substance de revêtement selon la revendication 1, **caractérisée en ce que** le composant a) est du verre soluble de potassium.

10. Substance de revêtement selon la revendication 1, **caractérisée en ce que** la proportion de composant a) dans la substance de revêtement selon l'invention s'élève à jusqu'à 5 % en poids, par rapport à la teneur totale en matières solides.

11. Substance de revêtement selon la revendication 1, **caractérisée en ce que** le composant b) présente des motifs de structure récurrents dérivés des groupes de monomères A1, A2, A3 et A5 ou dérivés de A1, A2, A3, A4 et A5.

12. Substance de revêtement selon la revendication 1, **caractérisée en ce que** le composant b) contient au moins un colloide protecteur et/ou au moins un agent émulsifiant, de préférence l'alcool polyvinylique.

13. Substance de revêtement selon la revendication 1, **caractérisée en ce que** la proportion de composant b) est de 5 à 50 % en poids, par rapport à la teneur totale en matières solides.

14. Substance de revêtement selon la revendication 1, **caractérisée en ce que** le composant c) est choisi dans le groupe constitué du carbonate de calcium, du mica ou de leurs combinaisons.

15. Substance de revêtement selon la revendication 1, **caractérisée en ce que** la proportion de composant c) est de 20 à 95 % en poids, par rapport à la teneur totale en matières solides.

16. Substance de revêtement selon la revendication 1, **caractérisée en ce que** le composant b) dérive de A1) l'acétate de vinyle, A2) l'éthylène, A3) d'esters de vinyle d'acides carboxyliques aliphatiques ramifiés avec 9 à 11 atomes de carbone, éventuellement éthyléniquement insaturés, et de monomères A4) contenant des groupes silane et éventuellement d'acides carboxyliques éthyléniquement insaturés A5) avec un ou deux groupes carboxyle, d'acides sulfoniques éthyléniquement insaturés avec un groupe acide sulfonique ou de leurs sels, dans laquelle la teneur en motifs de structure récurrents dérivés d'acétate de vinyle dans le copolymère est de 50 à 70 % en poids, en motifs de structure récurrents dérivés de l'éthylène dans le copolymère est de 15 à 20 % en poids, en motifs de structure récurrents dérivés d'esters de vinyle d'acides carboxyliques aliphatiques ramifiés avec 9 à 11 atomes de carbone dans le copolymère est de 10 à 40 % en poids, éventuellement en motifs de structure récurrents dérivés de monomères A4) éthyléniquement insaturés et contenant des groupes silane dans le copolymère - s'ils sont présents - s'élève à jusqu'à 5 % en poids, et éventuellement en motifs de structure récurrents dérivés d'acides carboxyliques éthyléniquement insaturés avec un ou deux groupes carboxyle, d'acides sulfoniques éthyléniquement insaturés avec un groupe acide sulfonique ou de leurs sels - s'ils sont présents - s'élève à jusqu'à 5 % en poids.

17. Procédé de préparation de substances aqueuses de revêtement exemptes de conservateur comprenant le mélange des composants a), b), éventuellement c) et éventuellement d) selon la revendication 1.

18. Procédé selon la revendication 17, **caractérisé en ce que** l'on utilise comme composant b) un copolymère préparé par polymérisation radicalaire en émulsion.

19. Utilisation de la substance aqueuse de revêtement exempte de conservateur selon la revendication 1 pour le revêtement de substrats de tous types.

20. Utilisation selon la revendication 19, **caractérisée en ce que** l'on utilise la substance aqueuse de revêtement exempte de conservateur comme matériau colorant.
